# EUROPÄISCHE PATENTSCHRIFT

(11) **EP 0 886 899 B1**
(45) Veröffentlichungstag und Bekanntmachung des Hinweises auf die Patenterteilung: **12.01.2000**
(21) Anmeldenummer: 97904429.4
(22) Anmeldetag: 13.02.1997
(51) Int. Cl.: H02B 1/30, H02B 1/56

(54) **MODULARER GEHÄUSEAUFBAU**
MODULAR CASING STRUCTURE
STRUCTURE DE BOITIER MODULAIRE

(30) Priorität: 13.03.1996 DE 19609699
(43) Veröffentlichungstag der Anmeldung: 30.12.1998
(73) Patentinhaber: Rittal-Werk Rudolf Loh GmbH & Co. KG, 35745 Herborn (DE)
(72) Erfinder: STRACKBEIN, Heinrich, D-35444 Bieberteil (DE); GEORG, Bernd, D-35745 Herborn (DE); NICOLAI, Walter, D-35418 Buseck (DE); DIEBEL, Michael, D-35687 Dillenburg (DE); EDELMANN, Achim, D-35686 Dillenburg (DE)
(74) Vertreter: Fleck, Hermann-Josef, Dr.-Ing.
(86) Internationale Anmeldenummer: EP9700654
(87) Internationale Veröffentlichungsnummer: WO9734346

(56) Entgegenhaltungen:
- DE-C- 4 103 678
- DE-C- 4 110 323
- DE-C- 4 111 457
- US-A- 3 868 158

## Beschreibung

Die Erfindung bezieht sich auf einen Schaltschrank mit einem modularen Gehäuseaufbau.

Vielfach werden Schaltschränke auf einem Sockel aufgebaut, und auf dem Dach des Schaltschrankes ist ein Dachklimagerät befestigt. Es ist auch bekannt, kleinere Schrankeinheiten in einem Gestell übereinander anzuordnen, wie in der US 3 868 158 gezeigt. Bei diesem Gehäuseaufbau sind mehrere boxenartige Einheiten zur Aufnahme elektronischer Baugruppen in einem Gestellrahmen übereinander und nebeneinander angeordnet. Die boxenartigen Gehäuseeinheiten sind mit Seitenwänden verschlossen. Außerdem weist der Gestellrahmen auf seinen beiden Seiten Seitenwände auf. Bei dieser bekannten Gehäuseanordnung kommt es insbesondere auf die einfache Austauschbarkeit der boxenartigen Gehäuseeinheiten an, wobei die Boxen leicht zugänglich und herausnehmbar sein müssen.

Der Erfindung liegt die Aufgabe zugrunde, einen Schaltschrank mit einem modularen Gehäuseaufbau bereitzustellen, der einen wesentlich besseren Schutz für die Einbauten bringt als bisherige Schaltschränke. Diese Aufgabe wird mit den Merkmalen des Anspruchs 1 gelöst.

Zumindest der Basis-Schrankkorpus ist damit allseitig mit jeweils zwei Wänden gesichert, so daß ein Eindringen in dessen Innenraum wesentlich erschwert ist. Die Seitenschutzwände bringen den optischen Eindruck eines normalen Schaltschranks, da sie sich über die Trennstellen der modularen Einheiten des Gehäuseaufbaus erstrecken. Um sich Zugang zum Innenraum des Basis-Schrankkorpus, des Bodengehäuses oder des Dachgehäuses zu verschaffen, müssen jeweils zwei Blechwände durchbrochen werden. Dies ist ein wesentlich besserer Schutz gegen Vandalismus gerade bei im Freien aufgestellten Gehäusen.

Nach einer Ausgestaltung kann vorgesehen sein, daß anstelle des als Rückwand des Basis-Schrankkorpus dienenden Wandelementes ein oder mehrere Wandklimageräte mit dem Basis-Schrankkorpus verbunden sind, so daß die Baugruppen im Basis-Schrankkorpus gekühlt werden können.

Ist zduem vorgesehen, daß das (die) Bodengehäuse als Batterieaufnahmegehäuse ausgebildet ist (sind), dann kann über die Batterien eine Notstromversorgung geschaffen werden.

Der Zugang zu den Batterien wird dabei dadurch erleichtert, daß das (die) Bodengehäuse mit einer ausziehbaren Schublade versehen ist (sind).

Der Aufbau des Gehäuses kann nach einer Ausgestaltung so vorgenommen werden, daß das (die) Bodengehäuse mit der Unterseite des mit dem Basis-Schrankkorpus verbundenen Sockels verbunden ist (sind). Der Sockel trennt dann den Basis-Schrankkorpus von dem (den) Bodengehäuse(n).

Der Aufbau des Gehäuses kann jedoch auch so erfolgen, daß der Sockel mit der Unterseite der (des) mit dem Basis-Schrankkorpus verbundenen Bodengehäuse(s) verbunden ist. Bei diesem Aufbau schließt der Sockel das Gehäuse zur Standfläche hin ab.

Die Klimatisierung des Basis-Schrankkorpus kann auch so ausgeführt werden, daß in das Dachgehäuse ein Dachklimagerät eingebaut ist. Im Bereich des Dachgehäuses ist dann bereits eine doppelte Wand erreicht, so daß die Seitenschutzwände in diesem Bereich eigentlich nicht mehr erforderlich sind. Sind die Seitenschutzwände dennoch über das Dachgehäuse geführt, dann wird die Sicherheit in diesem Bereich weiter erhöht.

Eine Art Regenschutz wird dadurch erreicht, daß das Dachgehäuse mit dem eingebauten Dachklimagerät mittels eines Dachelementes abgedeckt ist, das über alle Seiten des Dachgehäuses vorsteht und ringsum einen Lüftungsschlitz freiläßt oder daß der Basis-Schrankkorpus mit dem (den) angebauten Wandklimagerät(en) mittels eines Dachelementes abgedeckt ist, das über alle Seiten des Basis-Schrankkorpus und dem (den) angebauten Wandklimagerät(en) vorsteht und ringsum einen Lüftungsschlitz freiläßt.

Wird anstelle des Dachklimagerätes ein Wandklimagerät eingesetzt, dann wird in dem rückseitigen Bereich des Basis-Schrankkorpus die Sicherheit dadurch erreicht, daß die Wandklimageräte doppelwandig ausgebildet sind, wobei die dem Basis-Schrankkorpus zugekehrte Innenwand mit einer Ausgangsöffnung und einer Eintrittsöffnung versehen ist.

Aus Gründen der Optik und Sicherheit kann vorgesehen sein, daß sich die Tür über den Basis-Schrankkorpus, das (die) Bodengehäuse und das Dachgehäuse erstreckt.

Eine weitere Ausgestaltung ist dadurch gekennzeichnet, daß die Seitenschutzwände nur über das (die) Bodengehäuse, den Basis-Schrankkorpus und das Dachgehäuse erstrecken und daß der Sockel bündig mit den Außenseiten von Tür und den Seitenschutzwänden abschließt.

Im Bereich der Rückseite des Gehäuses kann vorgesehen sein, daß das (die) Wandklimagerät(e) sich nur über die Höhe des Basis-Schrankkorpus erstrecken und daß das (die) Bodengehäuse und das Dachgehäuse rückseitig mit Zusatz-Seitenschutzwänden abgedeckt sind.

Damit die Seitenschutzwände und die Zusatz-Seitenschutzwände nicht von außen her gelöst werden können, sieht eine Weiterbildung vor, daß die Seitenschutzwände und die Zusatz-Seitenschutzwände mit Befestigungsmitteln am Gehäuse angebracht sind, die von außen nicht einsehbar und nicht zugänglich sind. Das Dach und Dach- und Bodengehäuse werden durch die geschlossene Tür verriegelt, z.B. durch Überlappung.

Die Erfindung wird anhand von zwei in den Zeichnungen in Explosionsdarstellung gezeigten Ausführungsbeispielen näher erläutert. Es zeigt:
- Fig. 1: einen ersten Gehäuseaufbau und
- Fig. 2: einen zweiten Gehäuseaufbau mit abweichenden Modulareinheiten.

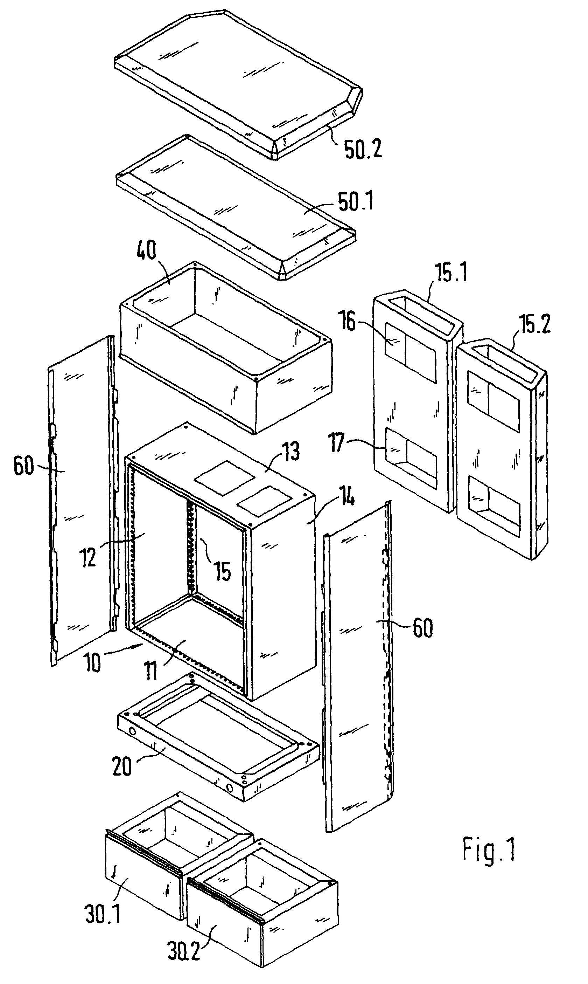

Bei dem Ausführungsbeispiel nach Fig. 1 ist ein Basis-Schrankkorpus 10 mit den Wandelementen 11,12,13,14 und 15 gezeigt. Im Bereich des als Bodenwand dienenden Wandelementes 11 wird ein rahmenartiger Sockel 20 angebracht. Mit der Unterseite des Sockels 20 werden die beiden Bodengehäuse 30.1 und 3.2 verbunden. Auf dem als Deckwand verwendeten Wandelement 13 des Basis-Schrankkorpus 10 wird ein Dachgehäuse 40 befestigt, das mit einem Dachelement 50.1 abgedeckt wird. Dieses Dachelement 50.1 ragt über alle Seiten des Dachgehäuses 40 vor und läßt ringsum einen Lüftungsschlitz frei.

Die Seiten des zusammengebauten Gehäuses werden zusätzlich noch mit Seitenschutzwänden 60 abgedeckt, die sich über die gesamte Höhe des Gehäuses erstrecken. Dasselbe gilt für die Rückseite und auch die nicht gezeigte Tür kann sich über die gesamte Höhe des Gehäuses erstrecken, so daß insgesamt ein doppelwandiger Gehäuseaufbau erreicht ist.

Anstelle des rückseitigen Wandelementes 15 können auch ein oder mehrere Wandklimageräte 15.1 und 15.2 mit dem Basis-Schrankkorpus 10 verbunden werden. Das Dachelement 50.2 ist an die ausladende Form der Wandklimageräte 15.1 und 15.2 angepaßt, so daß es wieder allseitig vorsteht und ringsum einen Lüftungsschlitz freiläßt.

Der so ausgestaltete Gehäuseaufbau ist gegen Randalismus gesichert, insbesondere dann, wenn die Seitenschutzwände 60 und die Wandklimageräte 15.1 und 15.2 mit Befestigungsmitteln am Basis-Schrankkorpus 10, den Bodengehäusen 30.1 und 30.2 sowie dem Dachgehäuse 40 befestigt sind, die von außen her nicht einsehbar und nicht zugänglich sind.

Wenn sich die Wandklimageräte 15.1 und 15.2 nur über die Höhe des Basis-Schrankkorpus 10 erstrecken, dann können im Bereich der Rückwand der Bodengehäuse 30.1 und 30.2 und des Dachgehäuses 40 auch Zusatz-Seitenschutzwände angebracht werden, um den Gehäuseaufbau doppelwandig zu vervollständigen.

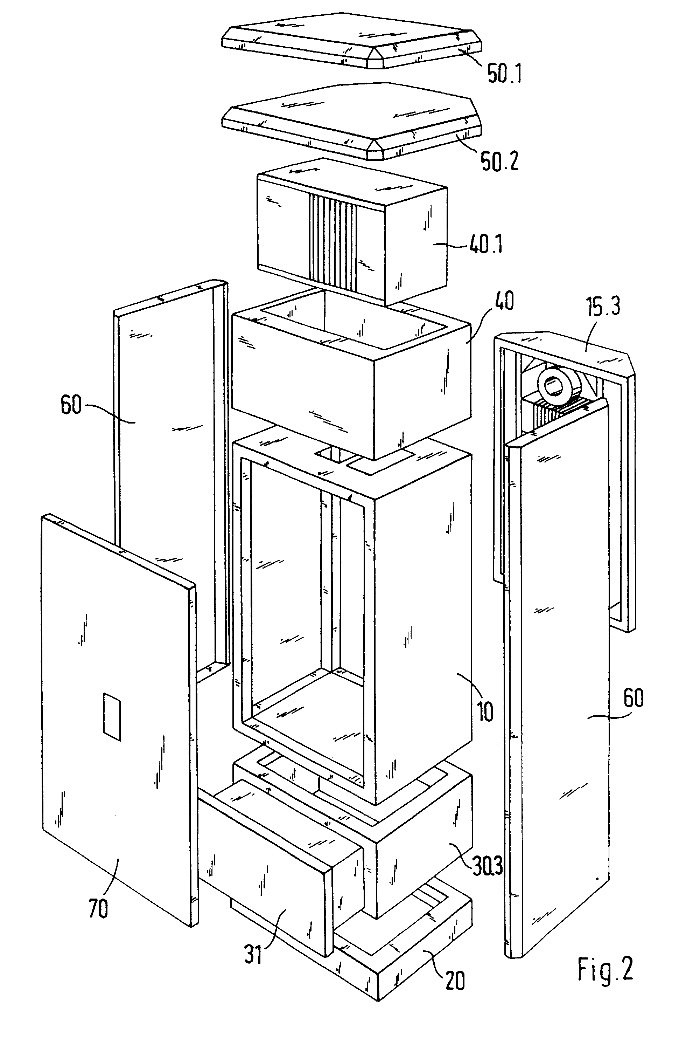

Im Ausführungsbeispiel nach Fig. 2 ist der Basis-Schrankkorpus 10 schmaler, so daß ein als Batterieaufnahme ausgebildetes Bodengehäuse 30.3 direkt mit der Unterseite des Basis-Schrankkorpus 10 verbunden werden kann. Der Sockel 20 schließt dann den Gehäuseaufbau zur Standfläche hin ab.

Das Dachgehäuse 40 kann ein Dachklimagerät 40.1 aufnehmen, das dann mit einem allseitig vorstehenden Dachelement 50.1 abgedeckt wird. Die offene Rückseite des Basis-Schrankkorpus 10 kann auch mit einem doppelwandigen Wandklimagerät 15.3 verschlossen werden. Das Dachelement 50.2 ist an die neue Umfangskontur des Gehäuseaufbaus angepaßt.

Das Bodengehäuse 30.3 ist mit einer die Batterien aufnehmenden Schublade 31 versehen. Die Tür 70 kann sich nur über die Höhe des Basis-Schrankkorpus 10 und des aufgesetzten Dachgehäuses 40 erstrecken. Sie ist doppelwandig ausgebildet.

Die Seitenschutzwände 60 können sich bis zur Standfläche des Gehäuseaufbaus erstrecken oder aber den Sockel 20 freilassen. Die Tür 70 kann sich ebenso gut auch über das Bodengehäuse 30.3, den Basis-Schrankkorpus 10 und das Dachgehäuse 40 erstrecken oder aber auch nur den Basis-Schrankkorpus 10 verschließen. In jedem Fall ist sie doppelwandig ausgebildet.

Die einzelnen Module können hinsichtlich Materialauswahl und Oberfläche bei diesem Gehäuseaufbau auf diese Weise optimal und kostengünstig hergestellt werden. Der Basis-Schwenkkörper kann aus Stahlblech Al Zn beschichtet hergestellt und ohne weitere Lackierung als z.B. HF-geschirmter Schrank verwendet werden. Die sichtbaren Schutzseitenwände können einzeln behandelt, z.B. gepulvert werden.

## Patentansprüche

1. Schaltschrank mit einem modularen Gehäuseaufbau, bestehend aus einem Basis-Schrankkorpus (10) mit fünf Wandelementen (11, 12, 13, 14, 15), einem Sockel (20), einem oder mehreren Bodengehäusen (30.3, 30.1, 30.2), einem Dachgehäuse (40), zusätzlichen Seitenschutzwänden (60), die sich über die gesamte Höhe des aus dem mindestens einen Bodengehäuse (30.3, 30.1, 30.2), dem Basis-Schrankkorpus (10) und dem Dachgehäuse (40) fest zusammengebauten Gehäuses erstrecken, sowie einer, zumindest den Basis-Schrankkorpus (10) verschließenden, doppelwandigen Tür (70), wobei die Seitenschutzwände (60) mit Befestigungsmitteln am Basis-Schrankkorpus (10), dem mindestens einen Bodengehäuse (30.1, 30.2) sowie dem Dachgehäuse (40) befestigt sind und wobei die Befestigungsmittel von außen her nicht einsehbar sind.

2. Gehäuseaufbau nach Anspruch 1,
dadurch gekennzeichnet,
daß anstelle des als Rückwand des Basis-Schrankkorpus (10) dienenden Wandelementes (15) ein oder mehrere Wandklimageräte (15.3,15.1.,15.2) mit dem Basis-Schrankkorpus (10) verbunden sind.

3. Gehäuseaufbau nach Anspruch 1 oder 2,
dadurch gekennzeichnet,
daß das (die) Bodengehäuse (30.3,30.1 ,30.2) als Batterieaufnahmegehäuse ausgebildet ist (sind).

4. Gehäuseaufbau nach einem der Ansprüche 1 bis 3,
dadurch gekennzeichnet,
daß das (die) Bodengehäuse (30.3,30.1,30.2) mit einer ausziehbaren Schublade (31) versehen ist (sind).

5. Gehäuseaufbau nach einem der Ansprüche 1 bis 4,
dadurch gekennzeichnet,
daß das (die) Bodengehäuse (30.3,30.1,30.2) mit der Unterseite des mit dem Basis-Schrankkorpus (10) verbundenen Sockels (20) verbunden ist (sind).

6. Gehäuseaufbau nach einem der Ansprüche 1 bis 5,
dadurch gekennzeichnet,
daß der Sockel (20) mit der Unterseite der (des) mit dem Basis-Schrankkorpus (10) verbundenen Bodengehäuse(s) verbunden ist.

7. Gehäuseaufbau nach einem der Ansprüche 1 bis 6,
dadurch gekennzeichnet,
daß in das Dachgehäuse (40) ein Dachklimagerät (40.1) eingebaut ist.

8. Gehäuseaufbau nach einem der Ansprüche 1 bis 7,
dadurch gekennzeichnet,
daß das Dachgehäuse (40) mit dem eingebauten Dachklimagerät (40.1) mittels eines Dachelementes (50.1) abgedeckt ist, das über alle Seiten des Dachgehäuses (40) vorsteht und ringsum einen Lüftungsschlitz freiläßt.

9. Gehäuseaufbau nach einem der Ansprüche 1 bis 7,
dadurch gekennzeichnet,
daß der Basis-Schrankkorpus (10) mit dem (den) angebauten Wandklimagerät(en) (15.3,15.1,15.2) mittels eines Dachelementes (50.2) abgedeckt ist, das über alle Seiten des Basis-Schrankkorpus (10) und dem (den) angebauten Wandklimagerät(en) (15.3,15.1,15.2) vorsteht und ringsum einen Lüftungsschlitz freiläßt.

10. Gehäuseaufbau nach Anspruch 2,
dadurch gekennzeichnet,
daß die Wandklimageräte (15.1,15.2,15.3) doppelwandig ausgebildet sind, wobei die dem Basis-Schrankkorpus (10) zugekehrte Innenwand mit einer Ausgangsöffnung (16) und einer Eintrittsöffnung (17) versehen ist.

11. Gehäuseaufbau nach einem der Ansprüche 1 bis 10,
dadurch gekennzeichnet,
daß sich die Tür (70) über den Basis-Schrankkorpus (10), das (die) Bodengehäuse (15.3,15.1,15.2) und das Dachgehäuse (40) erstreckt.

12. Gehäuseaufbau nach Anspruch 6,
dadurch gekennzeichnet,
daß die Seitenschutzwände (60) nur über das (die) Bodengehäuse (30.3,30.1,30.2), den Basis-Schrankkorpus (10) und das Dachgehäuse (40) erstrecken und
daß der Sockel (20) bündig mit den Außenseiten von Tür (70) und den Seitenschutzwänden (60) abschließt.

13. Gehäuseaufbau nach Anspruch 2,
dadurch gekennzeichnet,
daß das (die) Wandklimagerät(e) (15.3,15.1,15.2) sich nur über die Höhe des Basis-Schrankkorpus (10) erstrecken und
daß das (die) Bodengehäuse (30.3,30.1,30.2) und das Dachgehäuse (40) rückseitig mit Zusatz-Seitenschutzwänden abgedeckt sind.

14. Gehäuseaufbau nach Anspruch 13,
dadurch gekennzeichnet,
daß auch die Zusatz-Seitenschutzwände mit Befestigungsmitteln am Gehäuse angebracht sind, die von außen nicht einsehbar und nicht zugänglich sind.

15. Gehäuseaufbau nach einem der Ansprüche 1 bis 14,
dadurch gekennzeichnet,
daß das Dach (50.1, 50.2), das Dachgehäuse (40) und/oder das (die) Bodengehäuse (15.1, 15.2, 15.3) durch die geschlossene Tür (70) verriegelt sind, z.B. durch Überlappung.

16. Gehäuseaufbau nach einem der Ansprüche 1 bis 15,
dadurch gekennzeichnet,
daß der Basis-Schrankkorpus (10) aus Stahlblech (AlZn) besteht und ohne Oberflächenschuchtschicht hergestellt ist, während die Seitenschutzwände (60) und die Zusatz-Seitenschutzwände mit Oberflächenschutzschicht versehen sind, z.B. gepulvert sind.

## Claims

1. Switchgear cabinet with a modular housing structure, comprising a basic cabinet body (10) with five wall elements (11, 12, 13, 14, 15), a base (20), one or more bottom housings (30.3, 30.1, 30.2), a top housing (40), additional protective lateral walls (60), which extend over the entire height of the housing securedly assembled from at least one bottom housing (30.3, 30.1, 30.2), the basic cabinet body (10) and the top housing (40), and a double-walled door (70) which closes at least the basic cabinet body (10), wherein the protective lateral walls (60) are secured by securing means on the basic cabinet body (10), at least one bottom housing (30.1, 30.2) and the top housing (40), and wherein the securing means are not visible from the outside.

2. Housing structure according to claim 1, characterised in that, instead of the wall element (15), which serves as the rear wall of the basic cabinet body (10), one or more wall air-conditioning appliances (15.3, 15.1, 15.2) are connected to the basic cabinet body (10).

3. Housing structure according to claim 1 or 2, characterised in that the bottom housing(s) (30.3, 30.1, 30.2) is (are) configured as a battery accommodating housing (battery accommodating housings).

4. Housing structure according to one of claims 1 to 3, characterised in that the bottom housing(s) (30.3, 30.1, 30.2) is (are) provided with a removable drawer (31).

5. Housing structure according to one of claims 1 to 4, characterised in that the bottom housing(s) (30.3, 30.1, 30.2) is (are) connected to the underside of the base (20), which is connected to the basic cabinet body (10).

6. Housing structure according to one of claims 1 to 5, characterised in that the base (20) is connected to the underside of the bottom housing(s) connected to the basic cabinet body (10).

7. Housing structure according to one of claims 1 to 6, characterised in that a top air-conditioning appliance (40.1) is incorporated in the top housing (40).

8. Housing structure according to one of claims 1 to 7, characterised in that the top housing (40), with the top air-conditioning appliance (40.1) incorporated therein, is covered by means of a top element (50.1), which protrudes beyond all of the sides of the top housing (40) and leaves a ventilation slot all around.

9. Housing structure according to one of claims 1 to 7, characterised in that the basic cabinet body (10), with the wall air-conditioning appliance(s) (15.3, 15.1, 15.2) attached thereto, is covered by means of a top element (50.2), which protrudes beyond all of the sides of the basic cabinet body (10) and the attached wall air-conditioning appliance(s) (15.3, 15.1, 15.2), and leaves a ventilation slot all around.

10. Housing structure according to claim 2, characterised in that the wall air-conditioning appliances (15.1, 15.2, 15.3) have a double-walled configuration, the internal wall facing the basic cabinet body (10) being provided with an outlet aperture (16) and an inlet aperture (17).

11. Housing structure according to one of claims 1 to 10, characterised in that the door (70) extends over the basic cabinet body (10), the bottom housing(s) (30.3, 30.1, 30.2) and the top housing (40).

12. Housing structure according to claim 6, characterised in that the protective lateral walls (60) extend only over the bottom housing(s) (30.3, 30.1, 30.2, the basic cabinet body (10) and the top housing (40), and in that the base (20) terminates flush with the external surfaces of the door (70) and the protective lateral walls (60).

13. Housing structure according to claim 2, characterised in that the wall air-conditioning appliance(s) (15.3, 15.1, 15.2) extend only over the height of the basic cabinet body (10), and in that the bottom housing(s) (30.3, 30.1, 30.2) and the top housing (40) are covered on the rear side with additional protective lateral walls.

14. Housing structure according to claim 13, characterised in that the additional protective lateral walls are also mounted on the housing by securing means which, from the outside, are not visible and not accessible.

15. Housing structure according to one of claims 1 to 14, characterised in that the top (50.1, 50.2), the top housing (40) and/or the bottom housing(s) (30.1, 30.2, 30.3) are locked by the closed door (70), e.g. by overlapping.

16. Housing structure according to one of claims 1 to 15, characterised in that the basic cabinet body (10) is formed from sheet steel (AlZn) and produced without any protective surface layer, while the protective lateral walls (60) and the additional protective lateral walls are provided with a protective surface layer, e.g. are powder-coated.

## Revendications

1. Armoire de distribution à structure de boîtier modulaire, constituée d'un corps d'armoire de base (10) avec cinq éléments de paroi (11, 12, 13, 14, 15) d'un socle (20), d'un ou de plusieurs boîtiers de dessous (30.3, 30.1, 30.2), d'un boîtier de toit (40), de parois de protection (60) qui s'étendent sur la hauteur globale du boîtier solidement assemblé comprenant au moins un boîtier de dessous (30.3, 30.1, 30.2), le corps d'armoire de base (10) et le boîtier de toit, ainsi que d'une porte à double paroi (70) fermant au moins le corps d'armoire de base, o* les parois latérales de protection (60) sont par des moyens de fixation fixés au corps d'armoire de base (10), auquel sont fixés au moins un boîtier de dessous (30.1, 30.2) ainsi qu'un boîtier de toit (40) et où les moyens de fixation ne sont pas visibles depuis l'extérieur.

2. Structure de boîtier suivant la revendication 1,
caractérisée
en ce qu'à la place de l'élément de paroi (15) servant de paroi arrière du corps d'armoire de base (10), un ou plusieurs appareils de climatisation muraux (15.3, 15.1, 15.2) sont reliés au corps d'armoire de base (10).

3. Structure
caractérisée de boîtier suivant la revendication 1 ou la revendication 2,
caractérisée
en ce que le ou les boîtiers de dessous (30.3, 30.1, 30.2) ont la forme de boîtiers de réception de batterie.

4. Structure de boîtier suivant l'une quelconque des revendications de 1 à 3,
caractérisée
en ce que le ou les boîtiers de dessous (30.3, 30.1, 30.2) sont dotés d'un tiroir (31) pouvant être extrait.

5. Structure de boîtier suivant l'une quelconque des revendications de 1 à 4,
caractérisée
en ce que le ou les boîtiers de dessous (30.3, 30.1, 30.2) sont reliés à la face inférieure du socle (20) relié au corps d'armoire de base.

6. Structure de boîtier suivant l'une quelconque des revendications de 1 à 5,
caractérisée
en ce que le socle (20) est relié à la face inférieure du ou des boîtiers de dessous reliés au corps d'armoire de base (10).

7. Structure de boîtier suivant l'une quelconque des revendications de 1 à 6,
caractérisée
en ce que dans le boîtier de toit (40) est monté un appareil de climatisation de toit (40.1).

8. Structure de boîtier suivant l'une quelconque des revendications de 1 à 7,
caractérisée
en ce que le boîtier de toit (40) avec l'appareil de climatisation de toit (40.1) y monté est recouvert par un élément de toit (50.1), qui fait protubérance sur tous les côtés du boîtier de toit (40) et laisse libre une fente de ventilation périphérique.

9. Structure de boîtier suivant l'une quelconque des revendications de 1 à 7,
caractérisée
en ce que le corps d'armoire de base (10) avec le ou les appareils de climatisation muraux (15.3, 15.1, 15.2) y montés est recouvert d'un élément de toit (50.2), qui fait protubérance sur tous les côtés du corps d'armoire de base (10) et le ou les appareils de climatisation muraux (15.3, 15.1, 15.2) y montés et laisse libre une fente de ventilation périphérique.

10. Structure de boîtier suivant la revendication 2,
caractérisée
en ce que les appareils de climatisation muraux (15.3, 15.1, 15.2) sont à double paroi et en ce que la paroi intérieure tournée vers le corps d'armoire de base (10) présente une ouverture de sortie (16) et une ouverture d'entrée (17).

11. Structure de boîtier suivant l'une quelconque des revendications de 1 à 10,
caractérisée
en ce que la porte (70) s'étend sur le corps d'armoire de base (10), sur le ou les boîtiers de dessous (15.3, 15.1, 15.2) et sur le boîtier de toit (40).

12. Structure de boîtier suivant la revendication 6,
caractérisée
en ce que les parois latérales de protection (60) ne s'étendent que sur le ou les boîtiers de dessous (30.3, 30.1, 30.2), le corps d'armoire de base (10) et le boîtier de toit (40), et
en ce que le socle (20) se termine à fleur des côtés latéraux de la porte (70) et des parois latérales de protection (60).

13. Structure de boîtier suivant la revendication 2,
caractérisée
en ce que le ou les appareils de climatisation muraux (15.3, 15.1, 15.2) ne s'étendent que sur la hauteur du corps d'armoire de base (10) et
en ce que le ou les boîtiers de dessous (30.3, 30.1, 30.2) et le boîtier de toit (40) sont, au dos, recouverts de parois latérales de protection additionnelles.

14. Structure de boîtier suivant la revendication 13,
caractérisée
en ce que les parois latérales de protection additionnelles sont elles aussi par des moyens de fixation fixées au boîtier et sont pas visibles ni accessibles depuis l'extérieur.

15. Structure de boîtier suivant l'une quelconque des revendications de 1 à 14,
caractérisée
en ce que le toit (50.1, 50.2), le boîtier de toit (40) et/ou le ou les boîtiers de dessous (15.1, 15.2, 15.3) sont verrouillés par la porte (70) fermée, par exemple par chevauchement.

16. Structure de boîtier suivant l'une quelconque des revendications de 1 à 15,
caractérisée
en ce que le corps d'armoire de base (10) est fabriquée en tôle d'acier (AlZn) et ne comporte pas de couche de protection de surface, tandis que les parois latérales de protection (60) et les parois latérales de protection additionnelles sont dotées d'une couche de protection de surface, par exemple par pulvérisation.
